# EUROPEAN PATENT APPLICATION

(11) **EP 3 070 959 A1**
(43) Date of publication of application: **21.09.2016**
(21) Application number: 16161052.2
(22) Date of filing: 18.03.2016
(51) Int. Cl.: H04N 21/6547, H04N 21/658, H04N 21/237, H04N 21/4223, H04N 21/422, H04N 21/485, H04N 1/60

(54) **METHODS AND SYSTEMS FOR CONTENT PRESENTATION OPTIMIZATION**

(30) Priority: 18.03.2015 US 201514661317
(71) Applicant: Comcast Cable Communications, LLC, Philadelphia, PA 19103 (US)
(72) Inventor: Reichert Jr., Harry J., Warminster, PA 18974 (US)
(74) Representative: V.O.

(57) **Abstract**

Methods and systems for content presentation optimization are disclosed. A content and/or service provider can receive a data sample relating to a content item presented via a device. One or more configuration settings to be applied to the device can be determined based on the data sample. The one or more determined configuration settings of the device can be automatically or manually adjusted. In an aspect, a content and/or service provider can receive a content item from a content presentation device. The received content item can be analyzed against reference data. A modified content item can be generated based on the analysis. The modified content item can be transmitted to the content presentation device for content presentation.

## Description

### BACKGROUND

There are many different types of devices available for content consumption. Such devices utilize configuration settings that can be adjusted to affect the manner in which content is presented. For example, content presentation can be affected by adjusting color, brightness, contrast, etc. However, such adjustment requires sophisticated knowledge to access appropriate menus and to adjust the configuration settings correctly, and different adjustments may be necessary for different types of received content. As a result, configuration settings are often not utilized or not configured correctly. These and other shortcomings are addressed in the present disclosure.

### SUMMARY

It is to be understood that both the following general description and the following detailed description are exemplary and explanatory only and are not restrictive, as claimed. Provided are methods and systems for optimizing content presentation. In an aspect, a content and/or service provider can receive a data sample relating to content presented via a device (e.g., a user device, testing device, etc.). The data sample can be a still image, audio, and/or data representing content (e.g., video content) presented via the device. The data can comprise information regarding any property of an image, the audio, or the video, or any combination thereof. One or more configuration settings, such as corrective settings, can be determined and can be applied to the device. The one or more determined configuration settings can be provided to the device and can be automatically or manually applied. Alternatively, the configuration settings can be applied to the content being provided to the device.

Content presentation devices are useful for consuming and displaying a wealth of content. However, adjustment of various configuration settings, such as contrast, color, sharpness, and tint to produce a pleasing and accurate display of the content can be difficult for users. The present disclosure relates to methods and systems for content presentation optimization. This can be accomplished, in one aspect, by capturing at least a portion of a content item, or a representation of a portion of a content item, being presented or displayed on a content presentation device. The captured portion can then be transmitted to a presentation control system, which can be located at a central or remote location of a content provider, service operator, or another entity. For example, the at least a portion of a content item can comprise a full or partial screen capture. In some aspects, additional information can be obtained and transmitted as well, for example, ambient lighting information. The presentation control system can analyze the captured portion of the content item (and any additional information) and compare the received portion of content to reference data that is tuned for optimal display. The presentation control system can then provide instruction to modify display configuration settings on the presentation device. Alternatively or additionally, the presentation control system can cause modification of the content to correct any deficiencies found in the captured portion, so that the content will display optimally under the current settings of the presentation device.

In an aspect, an example system and method can comprise generating a data sample representative of a content item being presented via a first device. The generated data sample can be transmitted to a second device. The data sample can be compared to reference data, and one or more configuration settings can be determined by the second device based on the data sample and the reference data. The one or more configuration settings can be received from the second device and applied, either manually or automatically, to the first device.

In another aspect, an example system and method can comprise receiving a data sample relating to a content item being presented on a device. At least one parameter can be determined that is associated with the device, the presented content, or a combination thereof, based on the received data sample. One or more configuration settings can be determined based on the at least one parameter and transmitted to the device. In another aspect, an example system and method can comprise receiving content that represents content presented via a device. The received content can be analyzed against reference data and a modified content item can be generated based on the analysis. The modified content item can then be transmitted to the device.

Additional advantages will be set forth in part in the description which follows or may be learned by practice. The advantages will be realized and attained by means of the elements and combinations particularly pointed out in the appended claims.

### BRIEF DESCRIPTION OF THE DRAWINGS

The accompanying drawings, which are incorporated in and constitute a part of this specification, illustrate embodiments and together with the description, serve to explain the principles of the methods and systems:
Figure 1 illustrates various aspects of an exemplary system;
Figure 2 illustrates various aspects of an exemplary system;
Figure 3 is a flowchart illustrating an example method;
Figure 4 is a flowchart illustrating another example method;
Figure 5 is a flowchart illustrating another example method; and
Figure 6 is a block diagram illustrating an example computing device.

### DETAILED DESCRIPTION

Before the present methods and systems are disclosed and described, it is to be understood that the methods and systems are not limited to specific methods, specific components, or to particular implementations. It is also to be understood that the terminology used herein is for the purpose of describing particular embodiments only and is not intended to be limiting.

As used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by use of the antecedent "about," it will be understood that the particular value forms another embodiment. It will be further understood that the endpoints of each of the ranges are significant both in relation to the other endpoint, and independently of the other endpoint.

"Optional" or "optionally" means that the subsequently described event or circumstance may or may not occur, and that the description includes instances where said event or circumstance occurs and instances where it does not.

Throughout the description and claims of this specification, the word "comprise" and variations of the word, such as "comprising" and "comprises," means "including but not limited to," and is not intended to exclude, for example, other components, integers or steps. "Exemplary" means "an example of" and is not intended to convey an indication of a preferred or ideal embodiment. "Such as" is not used in a restrictive sense, but for explanatory purposes.

Disclosed are components that can be used to perform the disclosed methods and systems. These and other components are disclosed herein, and it is understood that when combinations, subsets, interactions, groups, etc. of these components are disclosed that while specific reference of each various individual and collective combinations and permutation of these may not be explicitly disclosed, each is specifically contemplated and described herein, for all methods and systems. This applies to all aspects of this application including, but not limited to, steps in disclosed methods. Thus, if there are a variety of additional steps that can be performed it is understood that each of these additional steps can be performed with any specific embodiment or combination of embodiments of the disclosed methods.

The present methods and systems may be understood more readily by reference to the following detailed description of preferred embodiments and the examples included therein and to the Figures and their previous and following description.

As will be appreciated by one skilled in the art, the methods and systems may take the form of an entirely hardware embodiment, an entirely software embodiment, or an embodiment combining software and hardware aspects. Furthermore, the methods and systems may take the form of a computer program product on a computer-readable storage medium having computer-readable program instructions (e.g., computer software) embodied in the storage medium. More particularly, the present methods and systems may take the form of web-implemented computer software. Any suitable computer-readable storage medium may be utilized including hard disks, CD-ROMs, optical storage devices, or magnetic storage devices.

Embodiments of the methods and systems are described below with reference to block diagrams and flowchart illustrations of methods, systems, apparatuses and computer program products. It will be understood that each block of the block diagrams and flowchart illustrations, and combinations of blocks in the block diagrams and flowchart illustrations, respectively, can be implemented by computer program instructions. These computer program instructions may be loaded onto a general purpose computer, special purpose computer, or other programmable data processing apparatus to produce a machine, such that the instructions which execute on the computer or other programmable data processing apparatus create a means for implementing the functions specified in the flowchart block or blocks.

These computer program instructions may also be stored in a computer-readable memory that can direct a computer or other programmable data processing apparatus to function in a particular manner, such that the instructions stored in the computer-readable memory produce an article of manufacture including computer-readable instructions for implementing the function specified in the flowchart block or blocks. The computer program instructions may also be loaded onto a computer or other programmable data processing apparatus to cause a series of operational steps to be performed on the computer or other programmable apparatus to produce a computer-implemented process such that the instructions that execute on the computer or other programmable apparatus provide steps for implementing the functions specified in the flowchart block or blocks.

Accordingly, blocks of the block diagrams and flowchart illustrations support combinations of means for performing the specified functions, combinations of steps for performing the specified functions and program instruction means for performing the specified functions. It will also be understood that each block of the block diagrams and flowchart illustrations, and combinations of blocks in the block diagrams and flowchart illustrations, can be implemented by special purpose hardware-based computer systems that perform the specified functions or steps, or combinations of special purpose hardware and computer instructions.

Methods and systems for content presentation optimization can be used to capture subject content (e.g., a data sample comprising image, audio, and/or video content), analyze the captured subject content, make recommendations to improve display of the captured subject content and facilitate improving the display of the subject content using an application. The subject content can be captured using, for example, screen capture software, a camera, combinations thereof, and the like.

Various parameters of the captured subject content can be evaluated by comparing the subject content to custom content (e.g., reference content comprising image, audio, and/or video content) to determine accuracy of the parameters relative to reference parameters. Parameters that can be evaluated can comprise an ambient light condition (e.g., ambient light intensity, ambient light direction), an optical property (e.g., color temperature, brightness, contrast, tint, sharpness, resolution, dimension, refresh rate), a listening condition (e.g., audio equipment, audio equipment configuration, an audio format, ambient noise, acoustics, an acceptable maximum volume level, an acceptable low frequency effects level, etc.), and other parameters that can be applicable to a specific display device being optimized. The evaluation process can occur locally or remotely.

Recommendations to improve the captured subject image can be provided to the user based on the outcome of the evaluation process. Adjustment of one or more of the parameters can be recommended. A user can determine which, if any, of the recommendations are followed.

Using a Graphical User Interface (GUI) of an application, a user can be provided an opportunity to select one or more parameters to adjust, either automatically or manually. The application can communicate with a display device used to display the captured subject content (or another device, such as premises terminal equipment). In automatic mode the application can continue to adjust the one or more selected parameters until display of the captured subject image is optimized. In manual mode the application can allow the user to adjust the one or more selected parameters. The application can provide feedback to the user in real time during the adjustment process. The adjustment process can continue as directed by the user until the one or more selected parameters have been adjusted. Information specific to the display device used to display the captured subject image can be provided to assist the user during the adjustment process.

The present disclosure relates to content and/or service provider implemented content presentation optimization. In an aspect, a data sample relating to content presented via a device can be transmitted to a content and/or service provider. The data sample can be a still image, audio, a video, information regarding any of the still image, the audio, or the video, or any combination thereof. The content and/or service provider can determine one or more configuration settings to be applied to the device based on the data sample. In an aspect, the configuration settings to be applied to the device can be determined based on differences between the transmitted data sample and a predefined reference data sample. The one or more configuration settings can be provided to the device and can be automatically or manually applied. In another aspect, the content and/or service provider can receive a content item that represents content presented via a device. The received content item can be compared against reference data. For example, one or more parameters of the received content item (e.g., ambient light intensity, ambient light direction, color temperature, brightness, contrast, tint, sharpness, resolution, dimension, refresh rate, audio equipment, audio equipment configuration , an audio format, ambient noise, acoustics, an acceptable maximum volume level, an acceptable low frequency effects level, etc.) can be compared to the reference data on a pixel basis to determine differences between the received content item and the reference data. The content and/or service provider can generate a modified content item (e.g., same television show but with higher native contrast setting) based on the analysis and transmit the modified content item to the device. The modified content item can be created by adjusting one or more parameters of a content item such that the content item, when displayed on the display device, can appear similar to the reference data.

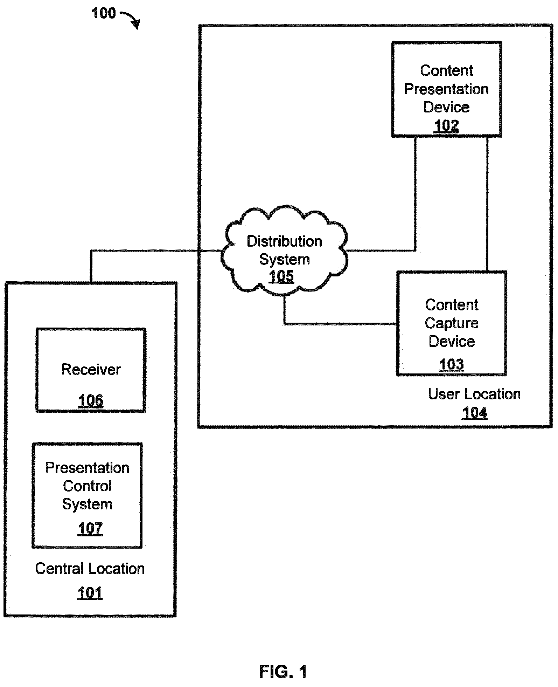

**FIG. 1** illustrates various aspects of an exemplary system **100.** The system **100** can comprise a presentation control system **107.** In an aspect, the presentation control system **107** can be located at a central location **101** (e.g., a headend). Alternatively, the presentation control system **107** can be located at a remote location. The central location **101** can receive content (e.g., data, input programming, and the like) from multiple sources. The central location **101** can combine the content from the various sources and can distribute the content to user (e.g., subscriber) locations (e.g., user location **104**) via a distribution system **105.** As an example, the distribution system **105** can distribute signals from the central location **101** to user locations. The distribution system **105** can comprise an optical fiber network, a coaxial cable network, a hybrid fiber-coaxial network, a wireless network, a satellite system, a direct broadcast system, or any combination thereof.

A content presentation device **102** can receive content from the central location **101** via the distribution system **105.** By way of example, the content presentation device **102** can comprise an electronic device such as a television, a set-top box, a laptop computer, a PDA, a smartphone, a GPS, a vehicle entertainment system, a portable media player, a monitor, a touchscreen, a camera, or any other electronic device having the ability to present video, audio, text, and/or images, and other types of content. In an aspect, at user location **104,** a demodulator and/or a decoder, such as a gateway or home communications terminal (HCT) can demodulate and/or decode, if needed, content to be presented on the content presentation device **102.** Those skilled in the art will appreciate that the content can be decoded by a variety of equipment, including an HCT, a computer, a TV, a monitor, or satellite dish, and the like. In an exemplary aspect, the methods and systems disclosed can be located within, or performed on, one or more demodulator, decoder, central location **101,** user locations **104,** and content presentation devices **102.**

In an aspect, the system **100** can comprise a content capture device **103.** The content capture device **103** can comprise a video (e.g., image) capture device, an audio capture device, or a combination thereof. As an example, the content capture device **103** can comprise a computer, a portable or stationary camera, a smartphone, a video camera, an audio recorder, a PDA, a tablet, and/or the like. The content capture device **103** and/or the content presentation device **102** can generate a data sample and transmit the data sample to the presentation control system **107.** In an aspect, the data sample can comprise information representing an image, a video, audio, a data set, an application, or a combination thereof, relating to content presented via the content presentation device **102.** In an aspect, the content capture device **103** can capture content (e.g., representative data, still image, video, and/or audio) presented on the content presentation device **102** and transmit a data sample relating to the content presented via the content presentation device **102** to the presentation control system **107.** In another aspect, one or more capture components internal to the content presentation device **102** (e.g., built-in screen capture component, microphone, and the like) can generate the data sample and transmit to the presentation control system **107.**

The data sample can comprise one or more of a screen capture, an image, a video clip, an audio clip, and any metadata associated with the screen capture, the image, the video clip and/or the audio clip. In an aspect, the data sample can comprise information relating to an ambient light condition (e.g., ambient light intensity, ambient light direction), an optical property (e.g., color temperature, brightness, contrast, tint, resolution, dimension, refresh rate), a viewing condition (e.g., viewing distance), a listening condition (e.g., audio equipment, audio equipment configuration, audio format, ambient noise, acoustics, acceptable maximum volume level, acceptable low frequency effects, etc.), one or more current configuration settings (e.g., a color setting, a brightness setting, a contrast setting, a tint setting, a resolution, a dimension, a refresh rate, etc.) of the content presentation device **102,** a configurability (e.g., a device model, a monitor size, monitor materials) of the content presentation device **102,** a user preference associated with the content presented on the content presentation device **102** (e.g., a preferred font size, a language, a volume, a viewing distance, etc.), a user preference associated with one or more configuration settings of the content presentation device **102** (e.g., a color setting, a brightness setting, a contrast setting, a tint setting, a resolution, a dimension, a refresh rate, etc.), a user preference associated with a content provider for providing the content to the content presentation device **102** (e.g., HD, SD), a network condition for transmitting the content to the content presentation device **102** (e.g., a bandwidth, a latency), or a combination thereof.

The presentation control system **107** can comprise one or a plurality of receivers **106** that can receive the data sample from the user location **104.** As an example, the presentation control system **107** can receive the data sample from the user location **104** via the distribution system **105,** which can comprise an optical fiber network, a coaxial cable network, a hybrid fiber-coaxial network, a wireless network, a satellite system, a direct broadcast system, or any combination thereof.

In an aspect, the presentation control system **107** can determine one or more configuration settings to be applied to the content presentation device **102** based on the received data sample. For example, presentation control system **107** can retrieve at least one parameter from the received data sample. In an aspect, the at least one parameter can comprise, for example, one or more parameters associated with one or more of a video, audio, an image, a data set, an application, and one or more configuration settings for the content presentation device **102.** As an example, the at least one parameter can comprise an ambient light condition (e.g., an ambient light intensity, an ambient light direction). As another example, the parameter can comprise an optical property (e.g., a color temperature, a brightness, a contrast, a tint, a resolution, a sharpness, a dimension, a refresh rate). Another example parameter can be a listening condition (e.g., audio equipment, audio equipment configuration, an audio format, ambient noise, acoustics, an acceptable maximum volume level, an acceptable low frequency effects level, etc.). The parameter can also comprise, for example, one or more current configuration settings of the content presentation device **102** (e.g., a color setting, a brightness setting, a contrast setting, a tint setting, a resolution, a dimension, a refresh rate, etc.). The parameter can also comprise a configurability of the content presentation device **102** (e.g., a device model, a monitor size, resolution, and other monitor device characteristics or capabilities). As a further example, the parameter can comprise a user preference associated with the content presented on the content presentation device **102** (e.g., a preferred font size, a language, a volume, a viewing distance, etc.), or a user preference associated with one or more configuration settings of the content presentation device, a user preference associated with a content provider for providing the content (e.g., HD, SD). The parameter can also comprise, for example, a network condition for transmitting the content between the presentation control system **107** and the content presentation device **102** (e.g., a bandwidth, a latency).

One or more parameters can be used to determine one or more configuration settings of the content presentation device **102.** The one or more configuration settings can be, for example, one or more of a brightness setting, a color setting, a contrast setting, a tint setting, a resolution, a dimension, a volume setting, a sound effect, and a transmission parameter associated with the content presentation device **102.** For example, a brightness setting of the content presentation device **102** can be increased when a brightness of the data sample as a whole is determined to be too low. As another example, a tint setting of the content presentation device **102** can be adjusted when a brightness of certain subpixels (e.g., red subpixels) is determined to be too low. As still another example, color balance (white balance) can be corrected by adjusting relative luminances of subpixels in the data sample such that luminances of red, blue, and green subpixels are approximately equal for picture elements displaying a white object. Other known techniques for image, audio, and/or video correction can be used to determine particular configuration settings to be adjusted on the basis of the parameters of the data sample. The determined one or more configuration settings can be transmitted from the presentation control system **107** to the content presentation device **102** at user location **104.** The one or more configuration settings can be applied to the content presentation device **102.**

The presentation control system **107** can determine at least one parameter associated with the received data sample, based on the received data sample, alone or in combination with other information. The presentation control system **107** can retrieve or determine at least one parameter from the received data sample. As an example, video parameters and image parameters can be determined by performing an analysis on the received data sample and the other information. Individual picture elements of the video content can be quantified. The quantified picture element and other information, such as details regarding the content capture device **103,** facilitate relative quantification of each picture element. In another aspect, detailed picture element information can be received directly from the content presentation device **102.** A parameter such as color level can be determined by evaluating a magnitude of each component part of a picture element. Tint can be determined by evaluating relative magnitudes of component parts of a picture element. An ambient light condition can be established by receiving ambient light information from the content presentation device **102.** Alternatively, ambient light information can be measured based on image and/or video information from the content capture device **103.**

As further examples, audio parameters can be determined using information available from the content presentation device **102.** For example, the data sample can comprise parameter data for audio, such as a sound mode, a volume level, frequency response settings, and the like, that can be extracted from the content presentation device **102.** Alternatively, the content capture device **103** can collect the parameter data for audio directly from the content presentation device **102,** or can measure the parameter data for audio from the content presentation device **102** and/or ambient noise using a microphone.

As an example, the at least one parameter can be associated with one or more of a video, audio, an image, a data set, an application, or a combination thereof, associated with the received data sample presented via the content presentation device **102.** For example, the at least one parameter can comprise an ambient light condition (e.g., ambient light intensity, ambient light direction), an optical property (e.g., color temperature, brightness, contrast, tint, sharpness, resolution, dimension, refresh rate), a listening condition (e.g., audio equipment, audio equipment configuration, an audio format, ambient noise, acoustics, acceptable maximum volume level, acceptable low frequency effects, etc.), one or more current configuration settings of the content presentation device **102** (e.g., a color, a brightness, a contrast, a tint, a resolution, a dimension, a refresh rate, etc.), a configurability of the content presentation device **102** (e.g., a device model, a monitor size, monitor materials), a user preference associated with the content presented via the content presentation device **102** (e.g., a preferred font size, a language, a volume, a viewing distance, etc.), a user preference associated with one or more configuration settings of the content presentation device **102,** a user preference associated with a content provider for providing the content (e.g., HD, SD), a network condition (e.g., a bandwidth, latency)for transmitting the content presented via the content presentation device **102,** and the like.

The at least one parameter can be used to determine one or more configuration settings of the content presentation device **102.** The one or more configuration settings can be, for example, one or more of a brightness setting, a color setting, a contrast setting, a tint setting, a resolution, a dimension, a volume setting, a sound effect, and the like, associated with the content presentation device **102.** In an aspect, the one or more configuration settings can be determined from parameter information transmitted with the data sample, on an absolute basis and/or a relative basis. Absolute configuration setting information can be obtained from the content presentation device **102.** The absolute configuration setting information can also be obtained from the content capture device **103** used in conjunction with menu screens displayed on the content presentation device **102.** Relative configuration setting information can be obtained by analyzing the data sample to quantify a specific attribute and one or more parameters associated with it, and one or more configuration settings associated with the one or more parameters. Picture brightness, for example, can be determined on an approximate basis by measuring a magnitude of luminance of the picture elements in one or more appropriate areas of the data sample. The magnitude measurement from the content capture device **103** in conjunction with display details related to the content presentation device **102** can yield a good estimation of current configuration settings. One or more brightness related configuration settings can be adjusted in the content presentation device 102 based on the absolute setting information and/or approximate configuration setting. The determined one or more configuration settings can be transmitted from the presentation control system **107** to the content presentation device **102** at the user location **104.** The content presentation device **102** can apply the received one or more configuration settings to adjust the manner in which the content is presented on the content presentation device **102.**

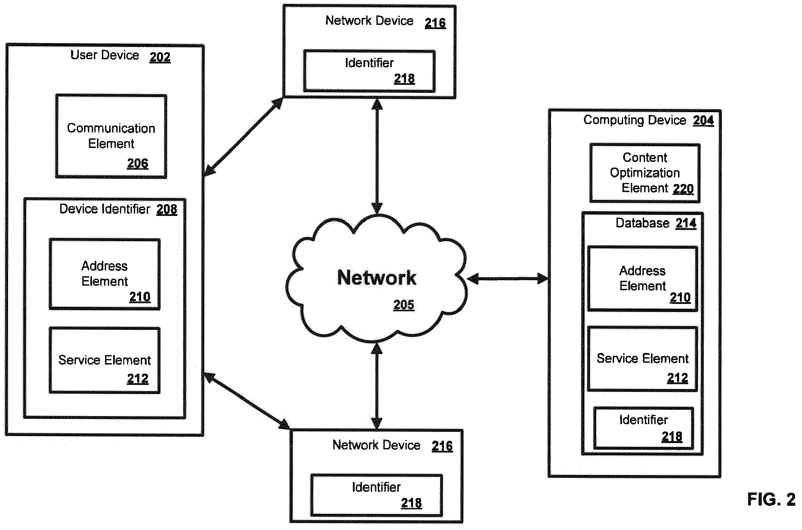

**FIG. 2** illustrates various aspects of an exemplary environment in which the present methods and systems can operate. In one aspect of the disclosure, a system can be configured to provide services such as network-related services to a user device. The present disclosure is relevant to systems and methods for providing services to a device, for example, a user device such as a computer, tablet, mobile device, communications terminal, or the like. In an aspect, one or more network devices can be configured to provide various services to one or more devices, such as devices located at or near a premises. In another aspect, the network devices can be configured to recognize an authoritative device for the premises and/or a particular service or services available at the premises.

The system can comprise a user device **202** in communication with a computing device **204** such as a content provider or a service provider, for example. The computing device **204** can comprise the presentation control system **107.** As an example, the user device **202** and the computing device **204** can be in communication via a private and/or public network **205** such as the Internet or a local area network. Other forms of communications can be used such as wired and wireless telecommunication channels, for example.

In an aspect, the user device **202** can be content presentation device **102.** The user device **202** can be an electronic device such as a computer, a smartphone, a laptop, a tablet, a set top box, a display device, or other device capable of communicating with the computing device **204.** As an example, the user device **202** can comprise a communication element **206** for providing an interface to a user to interact with the user device **202** and/or the computing device **204.** The communication element **206** can be any interface for presenting and/or receiving information to/from the user, such as user feedback. An example interface may be communication interface such as a web browser (e.g., Internet Explorer, Mozilla Firefox, Google Chrome, Safari, or the like). For example, the communication element **206** can comprise a graphical user interface (GUI) for a user to indicate specific configuration settings that can be adjusted automatically and specific configuration setting that can be adjusted manually. Other software, hardware, and/or interfaces can be used to provide communication between the user and one or more of the user device **202** and the computing device **204.** As an example, the communication element **206** can request or query various files from a local source and/or a remote source. As a further example, the communication element **206** can receive data transmitted from a central location such as the computing device **204.** As an example, the data can comprise information relating to one or more configuration settings associated with the user device **202.** As another example, the data can comprise a modified content item determined at the computing device **204.**

In an aspect, the user device **202** can be associated with a user identifier or device identifier **208.** As an example, the device identifier **208** can be any identifier, token, character, string, or the like, for differentiating one user or user device (e.g., user device **202**) from another user or user device. In a further aspect, the device identifier **208** can identify a user or user device as belonging to a particular class of users or user devices. As a further example, the device identifier **208** can comprise information relating to the user device such as a manufacturer, a model or type of device, a service provider associated with the user device **202,** a state of the user device **202,** a locator, and/or a label or classifier. Other information can be represented by the device identifier **208.** As an example, the device identifier **208** can be used by the computing device **204** to transmit a modified content item or one or more configuration settings to the user device **202.**

In an aspect, the device identifier **208** can comprise an address element **210** and a service element **212.** In an aspect, the address element **210** can comprise or provide an internet protocol address, a network address, a media access control (MAC) address, an Internet address, or the like. As an example, the address element **210** can be relied upon to establish a communication session between the user device **202** and the computing device **204** or other devices and/or networks. As a further example, the address element **210** can be used as an identifier or locator of the user device **202.** In an aspect, the address element **210** can be persistent for a particular network. As an example, the address element **210** can be used by the computing device **204** to transmit a modified content item or one or more configuration settings to the user device **202.**

In an aspect, the service element **212** can comprise an identification of a service provider associated with the user device **202** and/or with the class of user device **202.** The class of the user device **202** can be related to a type of device, capability of device, manufacture data of device, configurability of device, current configuration setting of device, manufacturer's data of device, preferences of content/service provider type of service being provided, and/or a level of service (e.g., business class, service tier, service package, etc.). As an example, the service element **212** can comprise information relating to or provided by a communication service provider (e.g., Internet service provider) that is providing or enabling data flow such as communication services to the user device **202.** As a further example, the service element **212** can comprise information relating to a preferred service provider for one or more particular services relating to the user device **202.** In an aspect, the address element **210** can be used to identify or retrieve data from the service element **212,** or vise versa. As a further example, one or more of the address element **210** and the service element **212** can be stored remotely from the user device **202** and retrieved by one or more devices such as the user device **202** and the computing device **204.** Other information can be represented by the service element **212.** In an aspect, the data sample can be generated and/or received from a content capture device (e.g., a camera) external to the user device **202** and/or one or more capture components internal to the user device **202** (e.g., built-in screen capture component, built-in microphone, and the like). In an aspect the one or more capture components internal to the user device **202** can be used to generate the data sample such that the data sample reflects content as it is presented by the user device (e.g., any configuration settings of the user device that affect the presentation of content are reflected in the data sample).

In an aspect, one or more network devices **216** can be in communication with a network such as network **205.** As an example, one or more of the network devices **216** can facilitate the connection of a device, such as user device **202,** to the network **205,** facilitating transmission of the data sample to the computing device **204.** As a further example, one or more of the network devices **216** can be configured as a wireless access point (WAP). In an aspect, one or more network devices **216** can be configured to allow one or more wireless devices to connect to a wired and/or wireless network using Wi-Fi, Bluetooth or any desired method or standard.

In an aspect, the network devices **216** can be configured as a local area network (LAN). As an example, one or more network devices **216** can comprise a dual band wireless access point. As an example, the network devices **216** can be configured with a first service set identifier (SSID) (e.g., associated with a user network or private network) to function as a local network for a particular user or users. As a further example, the network devices **216** can be configured with a second service set identifier (SSID) (e.g., associated with a public/community network or a hidden network) to function as a secondary network or redundant network for connected communication devices.

In an aspect, one or more network devices **216** can comprise an identifier **218.** As an example, one or more identifiers can be or relate to an Internet Protocol (IP) Address IPV4/IPV6 or a media access control address (MAC address) or the like. As a further example, one or more identifiers **218** can be a unique identifier for facilitating communications on the physical network segment. In an aspect, each of the network devices **216** can comprise a distinct identifier **218.** As an example, the identifiers **118** can be associated with a physical location of the network devices **216.**

In an aspect, the computing device **204** can be a server for communicating with the user device **202.** As an example, the computing device **204** can communicate with the user device **202** for providing data and/or services. As an example, the computing device **204** can provide services such as network (e.g., Internet) connectivity, media management (e.g., media server), content services, streaming services, broadband services, or other network-related services. In an aspect, the computing device **204** can allow the user device **202** to interact with remote resources such as data, devices, and files. As an example, the computing device **204** can be configured as (or disposed at) a central location (e.g., a headend, or processing facility), which can receive content (e.g., data, input programming) from multiple sources. The computing device **204** can combine the content from the multiple sources and can distribute the content to user (e.g., subscriber) locations via a distribution system.

In an aspect, the computing device **204** can comprise a content optimization element **220.** The content optimization element **220** can be configured to determine one or more configuration settings to be applied to the user device **202** (e.g., a content presentation device **102**) based on a data sample associated with content currently consumed on the user device **202.**

In an aspect, the one or more configuration settings can be determined at the content optimization element **220** by comparing the received data sample and reference data intended for the user to consume. As an example, the one or more configuration settings can comprise a color, a brightness, a contrast, a tint, a resolution, a dimension, a refresh rate, a volume, a sound effect, and the like. For example, the content optimization element **220** can be configured to determine at least one parameter associated with the user device **202** and/or content presented on the user device **202.** For example, the content optimization element **220** can retrieve at least one parameter associated with the user device **202** and/or content presented on the user device **202** from the received data sample. The at least one parameter can comprise ambient light condition (e.g., ambient light intensity, ambient light direction), an optical property (e.g., color temperature, brightness, contrast, tint, sharpness, resolution, dimension, refresh rate), a viewing condition (e.g., viewing distance), a listening condition (e.g., audio equipment, audio equipment configuration, audio format, ambient noise, acoustics, acceptable maximum volume level, acceptable low frequency effects, etc.), one or more current configuration settings of the user device **202** (e.g., color, brightness, contrast, tint, resolution, dimension, refresh rate, etc.), a configurability of the user device **202** (e.g., device model, monitor size, monitor materials), a user preference associated with the content presented on the user device **202** (e.g., preferred font size, language, volume, viewing distance, etc.), a user preference associated with one or more configuration settings of the user device **202,** a user preference associated with a content provider for providing the content to the user device **202** (e.g., HD, SD), a network condition for transmitting the content presented on the user device **202** (e.g., bandwidth, latency), and the like. As an example, user preferences can comprise contrast, brightness, color level, tint, color temperature, sharpness, resolution, aspect ratio, audio format, audio frequency response, dynamic range, audio processing, etc. In an aspect, user preferences can vary based on content types such as sports, news, movies, cartoons, games, photographs, applications, music, and the like.

In an aspect, the computing device **204** can receive a data sample from the user device **202.** The data sample can represent content presented via the user device **202.** The content optimization element **220** can analyze the received data sample against reference data. The content optimization element **220** can generate a modified content item based on the analysis. For example, the content optimization element **220** can analyze the received data sample (e.g., image, video, audio, etc.) against reference data and generate a modified content item based on the analysis.

In an aspect, appropriate reference data can be generated. The appropriate reference data can be generated by making adjustments to the original content item in response to available information (e.g., capture device characteristics, content type, presentation equipment details, user preferences etc.). If, for example, a particular capture device has limitations that will affect the resulting content representation (e.g., dynamic range, color accuracy, frequency response, etc.), those limitations can be factored into the development of the appropriate reference data by modifying the absolute/relative magnitude of each of the picture elements for the appropriate reference data. The appropriate reference data can then be used in a comparison process to determine the modified content item, which represents desired content. The comparison process can be performed by comparing individual picture elements between the received content and the appropriate reference data. If the difference is impacting a user experience (e.g., if the difference is above a predetermined threshold), then steps can be taken to change one or more of the parameters, generating a modified content item. The modified content item can be generated to ensure optimal viewing for specific user device (e.g., user device **202**) and/or a specific user. In an aspect the modified content item can be generated by adjusting one or more parameters of the content item. For example, a modified content item with a higher brightness can be generated by increasing a luminance of each picture element. As another example, a modified content item having an increased red tint can be generated by increasing luminance of only red subpixels of each picture element.

In an aspect, the computing device **204** can manage the communication between the user device **202** and a database **214** for sending and receiving data therebetween. As an example, the database **214** can store a plurality of files (e.g., web pages), user identifiers or records, or other information. As a further example, the user device **202** can request and/or retrieve a file from the database **214.** In an aspect, the database **214** can store information relating to the user device **202** such as the address element **210** and/or the service element **212.** As an example, the computing device **204** can obtain the device identifier **208** from the user device **202** and retrieve information from the database **214** such as the address element **210** and/or the service elements **212.** As a further example, the computing device **204** can obtain the address element **210** from the user device **202** and can retrieve the service element **212** from the database **214,** or vice versa. Any information can be stored in and retrieved from the database **214.** For example, the database **214** can store user preferred configuration settings associated with a specific user or user device (e.g., user device **202**). As an example, the configuration settings can comprise a color, a brightness, a contrast, a tint, a resolution, a dimension, a refresh rate, a volume, a sound effect, or a combination thereof associated with the user device **202.** The database **214** can be disposed remotely from the computing device **204** and accessed via a direct or an indirect connection. The database **214** can be integrated with the computing device **204** or some other device or system.

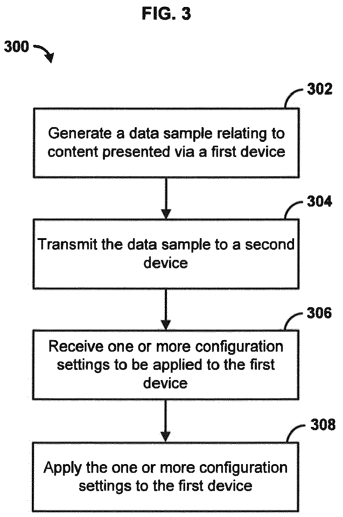

**FIG. 3** is a flowchart illustrating an example method. At step **302,** a data sample relating to a content item presented via a first device can be captured or generated. In an aspect, a content capture device (e.g., content capture device **103**) at a user location can generate (e.g., capture) the data sample relating to the content item presented via a content presentation device (e.g., content presentation device **102**). In an aspect, the content capture device can comprise, for example, one or more of a camera, a light meter (e.g., for measuring ambient light), a microphone, and the like. In another aspect, one or more content capture components internal to a content presentation device (e.g., built-in screen capture component, microphone, and the like) can generate the data sample relating to the content item presented via the content presentation device. As an example, the content presentation device can comprise a computer, a tablet, a smartphone, a television, a monitor, a touchscreen, a camera window, or other electronic device having an ability to present video and/or audio content. As another example, the content capture device can comprise a portable or stationary camera, such as a smartphone, a camera, a video camera, an audio recorder, a PDA, a tablet, and the like.

In an aspect, the data sample can comprise information representing an image, a video, audio, a data set, an application, or a combination thereof, relating to the content item presented via the first device (e.g., content presentation device **102**). As an example, the data sample can comprise information relating to an ambient light condition measured by the light meter, an optical property (e.g., a color temperature, a brightness, a contrast, a tint, a resolution, a dimension, a refresh rate, etc.), a viewing condition (e.g., viewing distance), a listening condition (e.g., audio equipment, an audio equipment configuration, an audio format, ambient noise, acoustics, an acceptable maximum volume level, acceptable low frequency effects, etc.), one or more current configuration settings of the first device (e.g., a color setting, a brightness setting, a contrast setting, a tint setting, a sharpness setting, a resolution, a dimension, a refresh rate, etc.), a configurability of the first device (e.g., device model, monitor size, monitor materials), a user preference associated with the content presented on the first device (e.g., preferred font size, language, volume, viewing distance, etc.), a user preference associated with one or more configuration settings of the first device, a user preference associated with a content provider for providing the content (e.g., HD, SD), a network condition for transmitting the content (e.g., bandwidth, latency), and the like.

At step **304,** the data sample can be transmitted to a second device. As an example, the second device can be the presentation control system **107.** In an aspect, the content capture device (e.g., content capture device **103**) can transmit the data sample to the presentation control system **107** at the central location **101.** The data sample can be transmitted via an optical fiber network, a coaxial cable network, a hybrid fiber-coaxial network, a wireless network, a satellite system, a direct broadcast system, or any combination thereof.

In an aspect, the one or more configuration settings can be determined by the second device (e.g., the presentation control system **107**) based on the data sample. As an example, the second device (e.g., the presentation control system **107**) can compare the received data sample (e.g., a presented content item) with reference data (e.g., an original content item) intended for the content presentation device **102** to display. In an aspect, a difference (e.g., difference in brightness, color, resolution, volume, font size, etc.) between the received data sample and the original content item can be determined. The presentation control system **107** can determine whether one or more parameters related to the data sample need to be modified and a degree of modification for optimal content presentation. Accordingly, one or more configuration settings related to the content presentation device **102** can be determined to minimize the difference and therefore match the reference data (e.g., original content item). For example, the presentation control system **107** can retrieve and/or determine a brightness level, a color temperature, a resolution, a font size, a volume, transmission parameters (e.g., bandwidth, transcoding method), and any other parameters associated with the received data sample (e.g., presented content) to match the corresponding parameters in the reference data (e.g., original content item). In an aspect, user preference associated with the presented content and user preference associated with the content presentation device can be considered to determine one or more configuration settings. For example, a certain brightness level can be determined for optimal viewing of specific content. However, the determined brightness level may be reduced for a particular viewer with a photosensitivity issue and who prefers the brightness level to be reduced.

At step **306,** one or more configuration settings to be applied to the first device can be received from the second device. In another aspect, the one or more configuration settings can be transmitted from the second device at the presentation control system to the first device (e.g., a television, a tablet). In an aspect, the one or more configuration settings can comprise one or more parameters related to an image, a video, audio, a data set, an application, or a combination thereof, relating to the content presented via the content presentation device. As an example, the one or more configuration settings can comprise one or more settings for a color, a brightness, a contrast, a tint, a resolution, a dimension, a refresh rate, a sharpness, a volume, a sound effect, and other configuration settings that may be applicable to a specific content presentation device (e.g., content presentation device **102**). At step **308,** the determined one or more configuration settings can be applied to the first device (e.g., content presentation device **102**). In an aspect, the configuration settings of the first device can be updated through a software development kit (SDK) or other available interface by a manufacturer of the first device. In an aspect, the second device can cause automatic adjustment of one or more configuration settings of the first device according to the one or more determined configuration settings. In another aspect, a user of the first device can perform manual configuration adjustment based on the determined one or more configuration settings. In an aspect, applying the one or more configuration settings to the first device (e.g., content presentation device **102**) can comprise applying one or more initial settings or modifying one or more current settings of the content presentation device. In another aspect, applying the one or more configuration settings to the first device (e.g., content presentation device **102**) can comprise adjusting one or more of a brightness setting, a color setting, a contrast setting, a tint setting, a sharpness setting, a resolution, a dimension, a volume, a sound effect, a transmission parameter of the device (e.g., content presentation device **102**), and the like.

In an aspect, a graphical user interface (GUI) can be provided for the user to indicate specific configuration settings that can be adjusted automatically and specific configuration settings that can be adjusted manually. For example, the user may wish to have color and sharpness adjusted automatically (e.g., via a content and/or service provider), while manually adjust resolution and brightness. The GUI can be displayed on the first device (e.g., content presentation device **102**) or another device such as customer premises equipment associated with the user. In an aspect, a user can also provide information related to the first device via the GUI. As an example, the information related to the first device can comprise monitor size (e.g., 27 inch, 30 inch, etc.), brand, model, type (e.g., LCD, LED, plasma, CRT), material (e.g., glass, liquid crystal, plasma cell) and the like. The information related to the first device can be transmitted to the second device to facilitate determination of one or more configuration settings.

In an aspect, a user can adjust one or more configuration settings of the first device according to user preference and/or requirements. For example, the user may have near-sighted vision, far-sighted vision, or have photosensitive issue. The user may further decrease brightness level or increase dimension. In manual adjustment, a user can adjust configuration settings based on user preferences and/or experience. In an aspect, the second device (e.g., content provider and/or service provider) can provide feedback to the user as the user makes manual adjustments to the configuration settings. The feedback can comprise recommendations on how a configuration setting can be adjusted to optimize content display. For example, the recommendations can comprise suggested a resolution and/or a certain brightness level for optimal display on the first device.

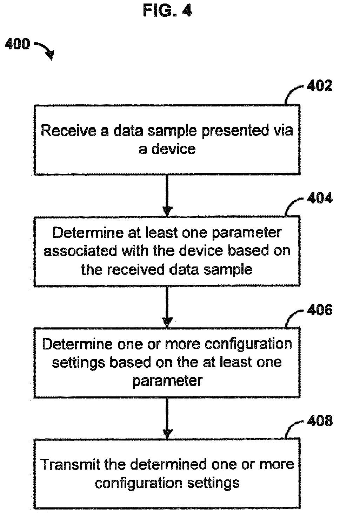

**FIG. 4** is a flowchart illustrating another example method. At step **402,** a data sample related to content presented via a device can be received. The data asset can be received from a content presentation device (e.g., content presentation device **102**) and or a content capture device (e.g., content capture device **103**). In an aspect, one or more content capture components internal to a content presentation device (e.g., built-in screen capture component, microphone, and the like) can generate (e.g., capture) a data sample. As an example, the content presentation device can comprise a television, a monitor, a touchscreen, a camera window, a PDA, a smartphone, a tablet, or other electronic device having an ability to present video, audio, or a combination thereof. In another aspect, a content capture device can capture content presented via the content presentation device (e.g., content presentation device **102**) and transmit the captured content (as a data sample) to a presentation control system **107** (e.g., at the central location **101**). As an example, the content capture device can comprise a video capture device, an audio capture device, or a combination thereof. By way of example, a portable or stationary camera such as a smartphone, camera, video camera, PDA, and the like, can be used to capture content presented via the content presentation device (e.g., content presentation device **102**).

In an aspect, the data sample can comprise an image, a video, audio, a data set, an application, or a combination thereof, associated with the content presented on the content presentation device. In an aspect, the data sample can comprise information relating to an ambient light condition (e.g., ambient light intensity, ambient light direction), an optical property (e.g., color temperature, brightness, contrast, tint, resolution, dimension, refresh rate), a viewing condition (e.g., viewing distance), a listening condition (e.g., audio equipment, audio equipment configuration, audio format, ambient noise, acoustics, acceptable maximum volume level, acceptable low frequency effects, etc.), one or more current configuration settings (e.g., color, brightness, contrast, tint, resolution, dimension, refresh rate, etc.)of the content presentation device, a configurability (e.g., device model, monitor size, monitor materials) of the content presentation device, a user preference associated with the content presented on the content presentation device (e.g., preferred font size, language, volume, viewing distance, etc.), a user preference associated with one or more configuration settings of the content presentation device (e.g., color, brightness, contrast, tint, resolution, dimension, refresh rate, etc.), a user preference associated with a content provider for providing the content to the content presentation device (e.g., HD, SD), a network condition for transmitting the content to the content presentation device (e.g., bandwidth, latency), or a combination thereof.

In an aspect, one or more user preferences can be transmitted or retrieved when the data sample is transmitted to the content provider and/or the service provider. User preferences can comprise a user preference associated with the presented content, a user preference associated with the content presentation device, a user preference associated with a content provider for providing the presented content, or a combination thereof. As an example, a user preference associated with the presented content can comprise a preferred font size, a language, a volume, a viewing distance, and the like. As another example, a user preference associated with the content presentation device can comprise a preferred color, a brightness, a contrast, a tint, a resolution, a dimension, a refresh rate, and the like.

In another aspect, user preferences can be stored in user information. For example, when the content provider and/or the service provider receives the data sample, the content and/or service provider can retrieve the user information from a database (e.g., database **214**) according to a device identifier (e.g., device identifier **208**) associated with the content presentation device. As such, user preferences can be retrieved.

At step **404,** at least one parameter associated with the content presentation device and/or the presented content can be determined based on the received data sample. In an aspect, the at least one parameter can comprise one or more parameters associated with one or more of a video, audio, an image, a data set, an application, and one or more configuration settings for the content presentation device. In an aspect, the at least one parameter can be determined based on one or more of an ambient light condition, an optical property, a viewing condition, a listening condition, one or more current configuration settings of the content presentation device, a configurability of the content presentation device (e.g., monitor size, monitor brand, monitor model, monitor type such as LCD, LED, plasma, CRT, monitor materials and other manufacture data), a user preference associated with the presented content, a user preference associated with one or more configuration settings of the content presentation device, a user preference associated with a content provider for providing the presented content, a network condition for transmitting the presented content, or a combination thereof. As an example, the at least one parameter can comprise an ambient light condition, an optical property (e.g., a color temperature, a brightness, a contrast, a tint, a sharpness, a resolution, a dimension, a refresh rate), a viewing condition (e.g., a viewing distance), a listening condition (e.g., audio equipment, audio equipment configuration, an audio format, ambient noise, acoustics, an acceptable maximum volume level, an acceptable low frequency effects level, etc.), one or more current configuration settings of a content presentation device (e.g., a color setting, a brightness setting, a contrast setting, a tint setting, a resolution, a dimension, a refresh rate, etc.), a configurability of the device (e.g., a device model, a monitor size, monitor materials), a user preference associated with the content presented via the content presentation device (e.g., a preferred font size, a language, a volume, a viewing distance, etc.), a user preference associated with one or more configuration settings of the content presentation device, a user preference associated with a content provider for providing the content (e.g., HD, SD), a network condition for transmitting the content (e.g., a bandwidth, a latency), and the like. One or more parameters may or may not be adjusted directly by the content presentation device.

In an aspect, one or more configuration settings can comprise a color, a brightness, a contrast, a tint, a resolution, a dimension, a refresh rate, an ambient light condition, a viewing condition, a listening condition, a combination thereof, and/or the like, that can be adjusted on a content presentation device (e.g., a television, a tablet, a video player, an audio player, etc.). One or more configuration settings can be adjusted on the content presentation device.

At step **406,** one or more configuration settings can be determined based on the determined at least one parameter. In an aspect, the presentation control system **107** can compare one or more parameters of the content presented via the content presentation device with reference data (e.g., original content transmitted to the content presentation device). A difference between the presented content and the reference data (e.g., an original content item) intended for a user to consume can be calculated. For example, a difference (e.g., a difference in brightness, color, resolution, volume, font size, etc.) between the presented content represented on the content presentation device and the reference data (e.g., the original content item) can be calculated. The presentation control system **107** can determine whether one or more parameters related to the represented content need to be modified and degree of modification for optimal content presentation. In an aspect, parametric analysis can be used to determine if there is a need to change one or more configuration settings of the content presentation device **102.** An example of parametric analysis is to capture the data sample from the content presentation device **102** as picture content and quantify the data sample.

A quantification process can be performed such that the magnitude of each of the components that makeup a picture element and collectively the data for all of the subject picture elements can be stored for comparison purposes. A comparison process can be performed to compare the quantified data sample and quantified reference data. The reference data can be, for example, the original content item or the original content item modified to reflect any constraints imposed by the content presentation device, viewing conditions, content, user preferences, and the like. A modification process can modify magnitudes of applicable picture elements based on results of the comparison process. In particular, the comparison process can be used to determine picture element differences between the data sample and the reference data. Magnitudes of any differences found by the comparison process can be analyzed by a threshold function used to identify differences that could negatively impact the user experience (e.g., differences that exceed a predetermined threshold). Output from the threshold detection function can be screened to identify one or more parameters that can be modified to make the data sample more similar to the reference data.

Based on information available for the content presentation device **102** and/or general knowledge available for presentation devices, available configuration settings for the content presentation device **102** can be identified and correlated with the parameters that can be modified to make the data sample more similar to the reference data. As another example, a tint setting of the content presentation device **102** can be adjusted when a brightness of certain subpixels (e.g., red subpixels) is determined to be too low. As still another example, color balance (white balance) can be corrected by adjusting relative luminances of subpixels in the data sample such that luminances of red, blue, and green subpixels are approximately equal for picture elements displaying a white object. Other known techniques for image, audio, and/or video correction can be used to determine particular configuration settings to be adjusted on the basis of the parameters of the data sample.

Various methods can be used to facilitate adjusting the configuration settings. In an aspect, a user can be provided with detailed instructions as to how to make the changes. For example, a suitable test pattern and on screen graphics can be used to guide the user. In another aspect, recommended changes can be communicated to the user through a second screen device (e.g., a smartphone, a tablet computer, a laptop computer, etc.). Further, the second screen device can be used to capture the modification in real time for analysis by the presentation control system **107.** In another aspect, the modifications to the configuration settings can be implemented by the presentation control system **107** using real time feedback from the user to determine a correct setting based on a communicated visual goal and the user feedback.

Accordingly, one or more configuration settings (e.g., a color setting, a color temperature setting, a brightness setting, a contrast setting, a tint setting, a resolution, a dimension, a refresh rate, a sharpness setting, a volume setting, a sound effect, a viewing mode, a sound mode, a sound system configuration setting, a sound frequency response setting, a sound balance, a network connectivity, and other configuration settings) related to the content presentation device **102** can be determined to minimize the difference and therefore match the reference data (e.g., the original content item). For example, the presentation control system **107** can retrieve and/or determine a brightness level, a color temperature, a resolution, a font size, a volume, transmission parameters (e.g., a bandwidth, a transcoding method), and any other parameters associated with the received presented content to match the corresponding parameters in the reference data (e.g., the original content item). In an aspect, user preference associated with the presented content and user preference associated with the content presentation device can be considered to determine one or more configuration settings. For example, a certain brightness level has been determined for optimal viewing of specific content. However, the determined brightness level may be reduced for a particular viewer with a photo sensitivity issue that causes the particular user to prefer the brightness level to be lower than an optimal level.

At step **408,** the determined one or more configuration settings can be transmitted to the device. In an aspect, the determined one or more configuration settings (e.g., contrast at a specific level, brightness at a specific level, etc.) can be transmitted from the presentation control system **107** (e.g., at the central location **101**) to a user device (e.g., content presentation device **102**) at a user location (e.g., user location **104**). In an aspect, the determined one or more configuration settings can be implemented on the content presentation device **102.** For example, the determined one or more configuration settings can be automatically applied to the content presentation device **102.** As another example, the determined one or more configuration settings can be a set of instructions on how to adjust the content presentation. In this scenario, a user can follow the set of instructions and manually adjust the respective configuration settings. In an aspect, a user can further adjust one or more configuration settings of the content presentation device **102** according to user preferences and/or requirements.

In an aspect, a graphical user interface (GUI) can be provided for the user to indicate specific configuration settings that can be adjusted automatically and specific configuration settings that can be adjusted manually. For example, the user may wish to have color and sharpness adjusted automatically (e.g., via a content and/or service provider), while manually adjust resolution and brightness. The GUI can be displayed on the device (e.g., content presentation device **102**) or another device such as customer premises equipment associated with the user. In an aspect, a user can also provide information related to the device via the GUI. As an example, the information related to the device can comprise monitor size (e.g., 27 inch, 30 inch, etc.), brand, model, type (e.g., LCD, LED, plasma, CRT), material (e.g., glass, liquid crystal, plasma cell) and the like. The information related to the device can be transmitted to the presentation control system **107** (e.g., at the central location **101**) to facilitate determination of one or more configuration settings.

In an aspect, a user can adjust one or more configuration settings of the device according to user preference and/or requirements. For example, the user may have near-sighted vision, far-sighted vision, or have a photosensitivity issue. The user may further decrease a brightness level or increase dimension. In manual adjustment, a user can adjust configuration settings based on user preferences and/or experience. In an aspect, the presentation control system 107can provide feedback to the user as the user makes manual adjustments to the configuration settings. The feedback can comprise recommendations on how a configuration setting can be adjusted to optimize content display. For example, the recommendations can comprise a suggested resolution and/or a certain brightness level for optimal display on the device.

In an aspect, one or more configuration settings can be further adjusted based on individual user needs. For example, a certain brightness level can be determined for optimal viewing of the presented content. However, the determined brightness level may be further decreased for a particular viewer with a photo sensitivity issue.

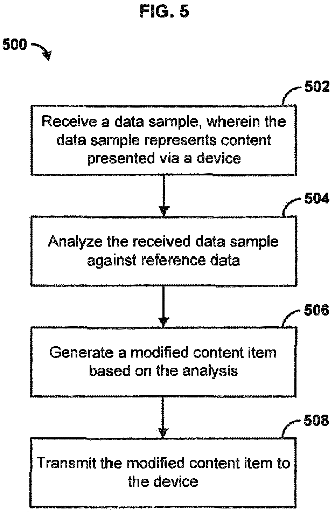

**FIG. 5** is a flowchart illustrating another example method. At step **502,** a data sample can be received. The data sample can represent content presented via a content presentation device (e.g., content presentation device **102**). As an example, the data sample can comprise an image (e.g., a screen capture), a video, audio, and/or a combination thereof. In an aspect, the data sample can comprise the entirety of a content item presented via the content presentation device. As an example, the content presentation device can comprise a monitor, a touchscreen, a camera display, a PDA, a smartphone, a tablet, or other electronic device having an ability to present video content, audio content, or other types of content. In an aspect, a content capture device (e.g., content capture device **103**) can acquire a content item (e.g., the content presented via content presentation device **102**) and transmit a data sample based on the content item to a presentation control system **107** via a network. As an example, the content capture device can comprise a portable or stationary camera such as smartphone, camera, video camera, audio recorder, tablet, PDA, and the like. In an aspect, the network can comprise an optical fiber network, a coaxial cable network, a hybrid fiber-coaxial network, a wireless network, a satellite system, a direct broadcast system, or any combination thereof. In an aspect, the data sample can be generated and/or received from one or more content capture components internal to a content presentation device (e.g., a built-in screen capture component, a microphone, and the like of the content presentation device **102**).

At step **504,** the received data sample can be analyzed (e.g., compared) against reference data. In an aspect, analyzing the received data sample against reference data can comprise determining one or more parameters such as an ambient light condition, an optical property, a viewing condition, a listening condition, one or more current configuration settings of the content presentation device, a configurability of the content presentation device (e.g., a model, a type, a monitor material, a monitor size, etc.), a user preference associated with the data sample, a user preference associated with the content presentation device, a user preference associated with a content provider for providing the content item associated with the data sample, a network condition for transmitting the data sample (e.g., a bandwidth, a latency, etc.), or a combination thereof associated with the received data sample. The determined one or more parameters can be compared with corresponding one or more parameters associated with the reference data. For example, one or more comparison function can be used to calculate the difference of one or more parameters between the received data sample and the reference data.

In an aspect, the presentation control system **107** can collect or retrieve user preferences associated with the received data sample and/or content presentation device, or a combination thereof. As an example, the user preference associated with the presented content can comprise a preferred font size, a language, a volume, a viewing distance, and the like. As another example, user preferences associated with the content presentation device can comprise a preferred color, a brightness, a contrast, a tint, a resolution, a dimension, a refresh rate, and the like.

In an aspect, reference data can be an optimal content item based on the determined ambient light condition, optical property, viewing condition, listening condition, configurability of the content presentation device, and user preferences. In an aspect, an image, a video, audio, data, an application, or a combination thereof associated with the received content item and the reference data respectively can be compared and analyzed. For example, one or more parameters such as an ambient light condition (e.g., an ambient light intensity, an ambient light direction), an optical property (e.g., a color temperature, a brightness, a contrast, a tint, a sharpness, a resolution, a dimension, a refresh rate), a listening condition (e.g., audio equipment, audio equipment configuration, an audio format, ambient noise, acoustics, an acceptable maximum volume level, an acceptable low frequency effects level, etc.), or a combination thereof associated with the received data sample and the reference data can be compared and analyzed.

In an aspect, one or more comparison functions can be provisioned. For example, each comparison function can correspond to a parameter associated with the received data sample. Specifically, a first comparison function can correspond to brightness, a second comparison function can correspond to color temperature, a third comparison function can correspond to resolution, and so on. One or more parameters (e.g., an ambient light intensity, an ambient light direction, a color temperature, a brightness, a contrast, a tint, a sharpness, a resolution, a dimension, a refresh rate, audio equipment, audio equipment configuration, an audio format, ambient noise, acoustics, an acceptable maximum volume level, an acceptable low frequency effects level, etc.) associated with the received data sample and the reference data can be retrieved from the received data sample and be used by the one or more comparison functions. Comparison results can be stored in a comparison file. One or more adjustments can be made by applying a static adjustment or a dynamic adjustment to the received content and/or a device for presenting the received content based on the comparison results. In an aspect, static adjustment can comprise adjusting one or more configuration settings according to one or more calculated values. In an aspect, dynamic adjustment can comprise adjusting one or more configuration settings according to one or more calculated values and user feedback. For example, in the dynamic adjustment, a user can indicate the degree and direction of further adjustment (e.g., brighter, darker, higher resolution, larger font, etc.) when one or more configuration settings are applied.

The comparison function can take many forms. For example, when the parameters to be compared are available directly from the content presentation device, they will be used. In this case, the parameters to be compared from the retrieved information will be used in conjunction with corresponding parameters in the reference information for the specific make and model and other applicable information to determine if a change is needed. Alternatively, if only capture device data is available, the capture device data can be quantified and translated, and the quantified and translated data can then be compared to the reference information for the specific make and model and other applicable information to determine if a change is appropriate. The translation can allow for correction of data because of inaccuracies in the capture device data.

In an aspect, the one or more comparison functions can be combined with a tracking system, a failure detection system, a threshold detection system, and the like. In an aspect, a tracking system can track portions of content that have been compared and/or adjusted. The tracking system can enable a comparison to be achieved portion by portion. For example, the portion of the received content item that has been compared can be marked differently than the portion of the received content item that has not been compared. In an aspect, the tracking system can identify, tag, coordinate, and facilitate accurate high speed comparisons. When importing data, the tracking system can work in conjunction with other systems (e.g., the threshold detection system and the failure detection system) to help ensure that a determination to adjust configuration settings of the content presentation device are appropriate and accurate. In an aspect, the tracking system can help to ensure the preparation of accurate reference data. In another aspect, the tracking system can use output from the comparison function to determine if one or more changes need to be made to the configuration settings.

In an aspect, a failure detection system can detect whether one or more parameters of the received content item do not match the corresponding parameters of the reference data. The failure detection system can also be used to determine if one or more of the parameters are beyond a user desired and/or preferred range. For example, if the current configuration setting for brightness is beyond a user preferred range, a failure on the brightness can be detected. In this scenario, the brightness can be adjusted to a user preferred range. In another aspect, the failure detection system can determine whether or not a content presentation device can be adjusted to match the reference data and/or comply with user preferences.

In an aspect, a threshold detection system can detect that a difference (e.g., color difference, brightness difference, resolution difference, etc.) between a parameter of the received content item and a corresponding parameter of the reference data is beyond a predefined threshold. Thus, the threshold detection system can be used to determine a magnitude of the difference between a particular parameter of the received content and a corresponding parameter of the reference data. For example, the threshold detection system can detect the brightness difference is beyond a predefined value, and thereby modify the received content item so that the brightness difference reaches an acceptable level (e.g., within the predefined threshold).

At step **506,** a modified content item can be generated based on the analysis. In an aspect, the modified content item can comprise one or more of a modified video, a modified image, modified audio, a modified data set, and a modified application associated with the received content item. As an example, the modified content item can comprise at least one modified parameter associated with the received data sample and/or content presentation device for the content presentation. The at least one modified parameter can comprise a modified ambient light condition (e.g., a modified ambient light intensity, a modified ambient light direction), a modified optical property (e.g., a modified color temperature, a modified brightness, a modified contrast, a modified tint, a modified sharpness, a modified resolution, a modified dimension, a modified refresh rate), a modified listening condition (e.g., audio equipment, a modified audio equipment configuration, a modified audio format, ambient noise, acoustics, a modified acceptable maximum volume level, a modified acceptable low frequency effects level, etc.), a modified transmission parameter, and the like, or a combination thereof. As a specific example, a modified transmission parameter can comprise a modified coding method, a modified packing method, a modified modulation method, and the like. In an aspect, the modified content item can be generated by the presentation control system **107** based on the received data sample and the comparison results stored in the comparison file. The modified content item can be created by modifying an existing content item stored at the presentation control system **107.**

At step **508,** the modified content item can be transmitted to the device. In an aspect, the modified content item can be transmitted from a presentation control system **107** (e.g., at the central location **101**) to a user device (e.g., content presentation device **102**). Accordingly, the modified content item can be presented on the content presentation device **102.** In an aspect, a user can further adjust one or more configuration settings of the content presentation device **102** according to user preference and/or user requirement.

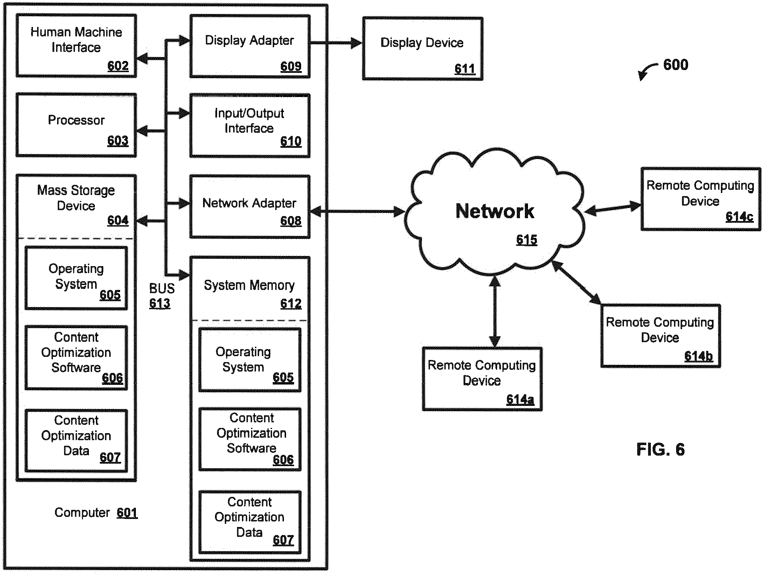

In an exemplary aspect, the methods and systems can be implemented on a computer **601** as illustrated in **FIG. 6** and described below. By way of example, computing device **204** of **FIG. 2** can be a computer as illustrated in **FIG. 6****.** Similarly, the methods and systems disclosed can utilize one or more computers to perform one or more functions in one or more locations. **FIG. 6** is a block diagram illustrating an exemplary operating environment for performing the disclosed methods. This exemplary operating environment is only an example of an operating environment and is not intended to suggest any limitation as to the scope of use or functionality of operating environment architecture. Neither should the operating environment be interpreted as having any dependency or requirement relating to any one or combination of components illustrated in the exemplary operating environment.

The present methods and systems can be operational with numerous other general purpose or special purpose computing system environments or configurations. Examples of well known computing systems, environments, and/or configurations that can be suitable for use with the systems and methods comprise, but are not limited to, personal computers, server computers, laptop devices, and multiprocessor systems. Additional examples comprise set top boxes, programmable consumer electronics, network PCs, minicomputers, mainframe computers, distributed computing environments that comprise any of the above systems or devices, and the like.

The processing of the disclosed methods and systems can be performed by software components. The disclosed systems and methods can be described in the general context of computer-executable instructions, such as program modules, being executed by one or more computers or other devices. Generally, program modules comprise computer code, routines, programs, objects, components, data structures, etc. that perform particular tasks or implement particular abstract data types. The disclosed methods can also be practiced in grid-based and distributed computing environments where tasks are performed by remote processing devices that are linked through a communications network. In a distributed computing environment, program modules can be located in both local and remote computer storage media including memory storage devices.

Further, one skilled in the art will appreciate that the systems and methods disclosed herein can be implemented via a general-purpose computing device in the form of a computer **601.** The components of the computer **601** can comprise, but are not limited to, one or more processors or processors **603,** a system memory **612,** and a system bus **613** that couples various system components including the processor **603** to the system memory **612.** In the case of multiple processors **603,** the system can utilize parallel computing.

The system bus **613** represents one or more of several possible types of bus structures, including a memory bus or memory controller, a peripheral bus, an accelerated graphics port, and a processor or local bus using any of a variety of bus architectures. By way of example, such architectures can comprise an Industry Standard Architecture (ISA) bus, a Micro Channel Architecture (MCA) bus, an Enhanced ISA (EISA) bus, a Video Electronics Standards Association (VESA) local bus, an Accelerated Graphics Port (AGP) bus, and a Peripheral Component Interconnects (PCI), a PCI-Express bus, a Personal Computer Memory Card Industry Association (PCMCIA), Universal Serial Bus (USB) and the like. The bus **613,** and all buses specified in this description can also be implemented over a wired or wireless network connection and each of the subsystems, including the processor **603,** a mass storage device **604,** an operating system **605,** content optimization software **606,** content optimization data **607,** a network adapter **608,** system memory **612,** an Input/Output Interface **610,** a display adapter **609,** a display device **611,** and a human machine interface **602,** can be contained within one or more remote computing devices **614a,b,c** at physically separate locations, connected through buses of this form, in effect implementing a fully distributed system.

The computer **601** typically comprises a variety of computer readable media. Exemplary readable media can be any available media that is accessible by the computer **601** and comprises, for example and not meant to be limiting, both volatile and non-volatile media, removable and non-removable media. The system memory **612** comprises computer readable media in the form of volatile memory, such as random access memory (RAM), and/or non-volatile memory, such as read only memory (ROM). The system memory **612** typically contains data such as content optimization data **607** and/or program modules such as operating system **605** and content optimization software **606** that are immediately accessible to and/or are presently operated on by the processors **603.**

In another aspect, the computer **601** can also comprise other removable/non-removable, volatile/non-volatile computer storage media. By way of example, **FIG. 6** illustrates a mass storage device **604** which can provide non-volatile storage of computer code, computer readable instructions, data structures, program modules, and other data for the computer **601.** For example and not meant to be limiting, a mass storage device **604** can be a hard disk, a removable magnetic disk, a removable optical disk, magnetic cassettes or other magnetic storage devices, flash memory cards, CD-ROM, digital versatile disks (DVD) or other optical storage, random access memories (RAM), read only memories (ROM), electrically erasable programmable read-only memory (EEPROM), and the like.

Optionally, any number of program modules can be stored on the mass storage device **604,** including by way of example, an operating system **605** and content optimization software **606.** Each of the operating system **605** and content optimization software **606** (or some combination thereof) can comprise elements of the programming and the content optimization software **606.** Content optimization data **607** can also be stored on the mass storage device **604.** Content optimization data **607** can be stored in any of one or more databases known in the art. Examples of such databases comprise, DB2®, Microsoft® Access, Microsoft® SQL Server, Oracle®, mySQL, PostgreSQL, and the like. The databases can be centralized or distributed across multiple systems.

In another aspect, the user can enter commands and information into the computer **601** via an input device (not shown). Examples of such input devices comprise, but are not limited to, a keyboard, pointing device (*e.g.,* a "mouse"), a microphone, a joystick, a scanner, tactile input devices such as gloves, and other body coverings, and the like These and other input devices can be connected to the processors **603** via a human machine interface **602** that is coupled to the system bus **613,** but can be connected by other interface and bus structures, such as a parallel port, game port, an IEEE 1394 Port (also known as a Firewire port), a serial port, or a universal serial bus (USB).

In yet another aspect, a display device **611** can also be connected to the system bus **613** via an interface, such as a display adapter **609.** It is contemplated that the computer **601** can have more than one display adapter **609** and the computer **601** can have more than one display device **611.** For example, a display device can be a monitor, an LCD (Liquid Crystal Display), or a projector. In addition to the display device **611,** other output peripheral devices can comprise components such as speakers (not shown) and a printer (not shown) which can be connected to the computer **601** via Input/Output Interface **610.** Any step and/or result of the methods can be output in any form to an output device. Such output can be any form of visual representation, including, but not limited to, textual, graphical, animation, audio, tactile, and the like. The display **611** and computer **601** can be part of one device, or separate devices.

The computer **601** can operate in a networked environment using logical connections to one or more remote computing devices **614a,b,c.** By way of example, a remote computing device can be a personal computer, portable computer, smartphone, a server, a router, a network computer, a peer device or other common network node, and so on. Logical connections between the computer **601** and a remote computing device **614a,b,c** can be made via a network **615,** such as a local area network (LAN) and/or a general wide area network (WAN). Such network connections can be through a network adapter **608.** A network adapter **608** can be implemented in both wired and wireless environments. Such networking environments are conventional and commonplace in dwellings, offices, enterprise-wide computer networks, intranets, and the Internet.

For purposes of illustration, application programs and other executable program components such as the operating system **605** are illustrated herein as discrete blocks, although it is recognized that such programs and components reside at various times in different storage components of the computing device **601,** and are executed by the data processor(s) of the computer. An implementation of content optimization software **606** can be stored on or transmitted across some form of computer readable media. Any of the disclosed methods can be performed by computer readable instructions embodied on computer readable media. Computer readable media can be any available media that can be accessed by a computer. By way of example and not meant to be limiting, computer readable media can comprise "computer storage media" and "communications media." "Computer storage media" comprise volatile and non-volatile, removable and non-removable media implemented in any methods or technology for storage of information such as computer readable instructions, data structures, program modules, or other data. Exemplary computer storage media comprises, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by a computer.

The methods and systems can employ Artificial Intelligence techniques such as machine learning and iterative learning. Examples of such techniques include, but are not limited to, expert systems, case based reasoning, Bayesian networks, behavior based AI, neural networks, fuzzy systems, evolutionary computation (e.g. genetic algorithms), swarm intelligence (e.g. ant algorithms), and hybrid intelligent systems (e.g. Expert inference rules generated through a neural network or production rules from statistical learning).

While the methods and systems have been described in connection with preferred embodiments and specific examples, it is not intended that the scope be limited to the particular embodiments set forth, as the embodiments herein are intended in all respects to be illustrative rather than restrictive.

Unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is in no way intended that an order be inferred, in any respect. This holds for any possible non-express basis for interpretation, including: matters of logic with respect to arrangement of steps or operational flow; plain meaning derived from grammatical organization or punctuation; the number or type of embodiments described in the specification.

It will be apparent to those skilled in the art that various modifications and variations can be made without departing from the scope or spirit. Other embodiments will be apparent to those skilled in the art from consideration of the specification and practice disclosed herein. It is intended that the specification and examples be considered as exemplary only, with a true scope and spirit being indicated by the following claims.

Hereinafter, various characteristics of various embodiments of the invention will be highlighted in a set of numbered clauses or paragraphs. These characteristics are not to be interpreted as being limiting on the invention or inventive concept, but are provided merely as a highlighting of some characteristics of the invention as described in the description, without suggesting a particular order of importance or relevancy of such characteristics. The invention is only limited by the appended claims presented in the correspondingly named section. The number clauses include:
Clause 1. A method comprising:
   generating a data sample relating to a content item presented via a first device;
   transmitting the data sample to a second device;
   receiving one or more configuration settings to be applied to the first device from the second device, wherein the one or more configuration settings are determined by the second device based on the data sample; and applying the one or more configuration settings to the first device.
Clause 2. The method of clause 1, wherein the data sample comprises information representing an image, a video, audio, a data set, an application, or a combination thereof, relating to the content item.
Clause 3. The method of clause 1, wherein the data sample comprises information relating to an optical property, one or more current configuration settings of the first device, or a combination thereof.
Clause 4. The method of clause 1, wherein applying the one or more configuration settings to the first device comprises applying the one or more configuration settings automatically, manually, or a combination thereof.
Clause 5. The method of clause 1, wherein the one or more configuration settings are determined by the second device by comparing the data sample to reference data.
Clause 6. The method of clause 1, wherein applying the one or more configuration settings to the first device comprises adjusting one or more of a brightness, a color, a contrast, a tint, a resolution, a dimension, a volume, a sound effect, and a transmission parameter associated with the first device.
Clause 7. A method comprising:
   receiving a data sample comprising a representation of content presented via a device;
   determining at least one parameter associated with the device, the presented content, or a combination thereof, based on the received data sample;
   determining one or more configuration settings based on the at least one parameter; and
   transmitting the determined one or more configuration settings.
Clause 8. The method of clause 7, wherein the data sample comprises an image, a video, audio, a data set, an application, or a combination thereof, associated with the content.
Clause 9. The method of clause 7, wherein the at least one parameter is determined based on one or more of an optical property, one or more current configuration settings of the device, or a combination thereof.
Clause 10. The method of clause 7, wherein the at least one parameter comprises one or more parameters associated with one or more of a video, audio, an image, a data set, an application, and one or more configuration settings for the device.
Clause 11. The method of clause 7, wherein the data sample is received from an image capture device, a video capture device, an audio capture device, or a combination thereof.
Clause 12. The method of clause 7, wherein the determined one or more configuration settings are implemented on the device for presenting the content.
Clause 13. The method of clause 12, wherein the determined one or more configuration settings are implemented automatically, manually, or a combination thereof.
Clause 14. A method comprising:
   receiving a data sample, wherein the data sample represents content presented via a device;
   analyzing the received data sample against reference data;
   generating a modified content item based on the analysis; and
   transmitting the modified content item to the device.
Clause 15. The method of clause 14, wherein analyzing the received data sample against reference data comprises comparing one or more parameters associated with a video, audio, an image, a data set, an application, or a combination thereof between the received data sample and the reference data.
Clause 16. The method of clause 14, wherein analyzing the received data sample against reference data comprises determining an optical property, one or more current configuration settings of the device, or a combination thereof.
Clause 17. The method of clause 14, wherein the presented content comprises an image, a video, audio, a data set, an application, or a combination thereof.
Clause 18. The method of clause 14, wherein the modified content item comprises one or more of modified video, modified audio, modified image, modified data set, and modified application associated with the content item.
Clause 19. The method of clause 14, wherein the data sample is received from an image capture device, a video capture device, an audio capture device, or a combination thereof.
Clause 20. The method of clause 14, wherein the modified content item is presented on the device.

## Claims

1. A method comprising:
generating a data sample of a content item presented via a content presentation device (102);
transmitting the data sample to a presentation control system (107);
receiving, from the presentation control system (107), one or more configuration settings to be applied to the content presentation device (102) to adjust one or more display parameters of the content presentation device (102), wherein the one or more configuration settings are determined by the presentation control system (107) based on the data sample; and
applying the one or more configuration settings to the content presentation device (102).

2. The method of claim 1, wherein the data sample comprises information representing an image, a video, audio, a data set, an application, or a combination thereof, relating to the content item.

3. The method of claim 1 or 2, wherein the data sample comprises information relating to an optical property, one or more current configuration settings of the content presentation device (102), or a combination thereof.

4. The method of any of the preceding claims, wherein applying the one or more configuration settings to the content presentation device (102) comprises applying the one or more configuration settings automatically, manually, or a combination thereof.

5. The method of any of the preceding claims, wherein the one or more configuration settings are determined by the presentation control system (107) by comparing the data sample to reference data.

6. The method of any of the preceding claims, wherein applying the one or more configuration settings to the content presentation device (102) comprises adjusting one or more of a brightness, a color, a contrast, a tint, a resolution, a dimension, a volume, a sound effect, and a transmission parameter associated with the content presentation device (102).

7. The method of any of the preceding claims, wherein the information is generated by a content capture device (103) comprising an image capture device, a video capture device, an audio capture device, or a combination thereof.

8. A system (600) comprising:
a memory (604) having encoded thereon computer-executable instructions; and
a processor (603) functionally coupled to the memory (604) and configured, by the computer-executable instructions, to perform at least the following actions,
generating a data sample of a content item presented via a content presentation device (102);
transmitting the data sample to a presentation control system (107);
receiving, from the presentation control system (107), one or more configuration settings to be applied to the content presentation device (102) to adjust one or more display parameters of the content presentation device (102), wherein the one or more configuration settings are determined by the presentation control system (107) based on the data sample; and
applying the one or more configuration settings to the content presentation device (102).

9. The system of claim 8, wherein applying the one or more configuration settings to the content presentation device (102) comprises adjusting one or more of a brightness, a color, a contrast, a tint, a resolution, a dimension, a volume, a sound effect, and a transmission parameter associated with the content presentation device (102).

10. The system of claim 8 or 9, wherein the one or more configuration settings are determined by the presentation control system (102) by comparing the data sample to reference data.

11. The system of any of the claims 8-10, wherein the data sample comprises information relating to an optical property, one or more current configuration settings of the content presentation device (102), or a combination thereof.

12. A computer-readable medium (604) having computer-executable instructions adapted to cause a computer system (600) to perform the method of:
generating a data sample of a content item presented via a content presentation device (102);
transmitting the data sample to a presentation control system (107);
receiving, from the presentation control system (102), one or more configuration settings to be applied to the content presentation device (102) to adjust one or more display parameters of the content presentation device (102), wherein the one or more configuration settings are determined by the presentation control system (107) based on the data sample; and
applying the one or more configuration settings to the content presentation device (102).

13. The computer-readable medium of claim 12, wherein applying the one or more configuration settings to the content presentation device (102) comprises adjusting one or more of a brightness, a color, a contrast, a tint, a resolution, a dimension, a volume, a sound effect, and a transmission parameter associated with the content presentation device (102).

14. The computer-readable medium of claim 12 or 13, wherein the one or more configuration settings are determined by the presentation control system (107) by comparing the data sample to reference data.

15. The computer-readable medium of claim 12, 13 or 14, wherein the data sample comprises information relating to an optical property, one or more current configuration settings of the content presentation device (102), or a combination thereof.
